Europäisches Patentamt

European Patent Office

Office européen des brevets

(19)

(11) Numéro de publication : **0 297 009 B1**

## (12) FASCICULE DE BREVET EUROPEEN

(45) Date de publication du fascicule du brevet :
18.12.91 Bulletin 91/51

(51) Int. Cl.⁵ : **B60D 1/00**, B62D 53/00

(21) Numéro de dépôt : **88440042.5**

(22) Date de dépôt : **31.05.88**

(54) **Attelage court à géométrie variable à appuis d'articulationbutée mobiles en arc de cercle pour remorques dites équilibrées et semi-remorques.**

(30) Priorité : **18.06.87 FR 8708689**

(43) Date de publication de la demande :
**28.12.88 Bulletin 88/52**

(45) Mention de la délivrance du brevet :
**18.12.91 Bulletin 91/51**

(84) Etats contractants désignés :
**AT BE DE ES GB IT NL**

(56) Documents cités :
**EP-A- 0 151 506**
**CH-A- 570 294**
**DE-A- 3 145 871**

(73) Titulaire : **LOHR INDUSTRIE**
**29, rue du 14 Juillet**
**F-67980 Hangenbieten (FR)**

(72) Inventeur : **André, Jean-Luc**
**15, route du Vin**
**67310 - Dangolsheim (FR)**

(74) Mandataire : **Metz, Paul**
**CABINET METZ PATNI 63, rue de la Ganzau**
**B.P. 63**
**F-67024 Strasbourg (FR)**

## Description

La présente invention se rapporte à un attelage court à géométrie variable à appuis symétriques mobiles d'articulation-butée entre un camion porteur remorqueur et sa remorque notamment pour remorques équilibrées et semi-remorques et, plus généralement à toutes les remorques sans essieu avant.

Plus particulièrement selon cette invention, les appuis mobiles d'articulation-butée entre la remorque et le camion sont mobiles sur une trajectoire en arc de cercle.

Le secteur technique visé par l'invention est celui des transports routiers par convois composés d'un camion porteur remorqueur attelé à une remorque ou articulé à une semi-remorque.

L'attelage court à géométrie variable selon l'invention se rapporte plus particulièrement à un véhicule porteur remorquer relié à sa remorque ou articulé à une semi-remorque par un attelage de longueur minimale variable en fonction du rayon de braquage, de manière à rester dans les limites légales de longueur d'un convoi routier en ligne droite.

La longueur limite d'un convoi routier étant imposée par la réglementation routière, on ne peut que diminuer la longueur de l'attelage ou la distance séparant le front de la semi-remorque de l'arrière de la cabine pour gagner en capacité de chargement.

Or, pour des raisons de sécurité, la longueur de la liaison articulée est elle-même limitée par la distance minimale possible entre la partie arrière du camion et le front avant de la remorque ou entre la cabine et la semi-remorque. En effet, le dégagement entre le camion et sa remorque ou entre la cabine et la semi-remorque doit être suffisant pour éviter les heurts des deux parties en correspondance aussi bien dans les virages où les arêtes de coin de la remorque risquent de cogner la face arrière du camion ou de la cabine, que dans les bosses ou les creux où le même risque est représenté par l'arête horizontale soit inférieure, soit supérieure, de la remorque.

Les divers constructeurs ont imaginé, pour augmenter la capacité en chargement de leurs convois routiers tractés ou semi-portés, diverses solutions techniques permettant de rendre variable la longueur de l'attelage d'une position rétractée en ligne droite permettant de satisfaire aux obligations légales à une position allongée en virage ou lors des manoeuvres pour assurer le libre débattement angulaire de la remorque ou de la semi-remorque, même dans le cas de courbes très prononcées.

Bien entendu, on vise dans la position rétractée, l'écartement minimal entre la remorque et la face arrière de la carrosserie du camion ou de la cabine, de manière à gagner le plus possible en capacité de chargement.

Ce gain s'avère d'autant plus important qu'il permet de gagner une largeur complète de palette.

Parmi les diverses solutions imaginées par les constructeurs, on peut citer les brevets suivants. Le brevet européen n° 31596 déposé par la société Emil DOLL, le brevet européen n° 33873 déposé par la société MEIER, les brevets européens déposés par la société KASSBOHRER n° 66269 et 168521, les brevets européens n° 111760 déposé par ORTHAUS et n° 122527 par KRONE, le brevet suisse n° 570294 VETTER et le brevet français n° 2544258 FREJAT.

Ces solutions antérieures concernent des timons mécaniques sous la forme de moyens de guidage à glissières de la timonnerie dans une direction longitudinale et des moyens mécaniques conjugués pour déplacer le timon de l'arrière vers l'avant dans les courbes.

Ces moyens d'ajustement s'avèrent délicats et sensibles aux chocs. Il faut donc les protéger.

De plus, leur construction est onéreuse et ils favorisent la génération des mouvements de lacets en descente.

Par ailleurs, il existe actuellement dans le commerce des timons extensibles dits à commande active.

Selon ces ensembles, le timon est allongé par un dispositif pneumatique commandé par un détecteur de proximité avec ou sans contact. Le rapprochement de la remorque au-delà d'une distance minimale est ainsi détecté et actionne un dispositif pneumatique de poussée en extension de manière à éviter les heurts entre l'arrière du camion et la remorque. L'énergie nécessaire au déplacement d'allongement du timon est prélevée sur le réseau du camion ou fournie par un groupe auxiliaire indépendant.

Ce type de solution nécessite une réalisation complexe et onéreuse. De plus, elle est limitée par la géométrie du système et par la vitesse de réaction de l'ensemble hydraulique.

Par ailleurs, leur application à un convoi formé d'un tracteur et d'une semi-remorque s'avère peu évidente.

Les autre inconvénients de ces systèmes concernent le poids et l'encombrement.

On connaît également un attelage court à géométrie variable appliqué à une remorque à train avant directeur, décrit dans le document DE-A-3145871 et présentant les caractéristiques définies dans le préambule de la revendication 1. Cet attelage comprend un timon coulissant commandant l'orientation de l'essieu directeur et un ensemble articulé formé de deux bielles télescopiques à blocage d'extension. Cependant, cet attelage, avec son système interactif qui modifie l'orientation de l'essieu, ne pourrait pas être transposé à une remorque à essieux centraux dans laquelle le timon doit rester perpendiculaire à l'essieu, car d'une part, la solidité de ses liaisons mécaniques serait insuffisante pour encaisser les efforts de traction en ligne droite et de report de charge vers le tracteur de la remorque, auquel s'ajoutent les efforts dynamiques dus à la traction et au freinage, et d'autre part la stabilité et la tenue de route ne seraient pas garantis.

La présente invention a pour but de remédier à ces inconvénients en proposant un attelage court à géométrie variable particulièrement simple et performant applicable à une remorque dite équilibrée ou à essieux centraux et à une semi-remorque.

Les caractéristiques définies dans la partie caractérisante de la revendication 1 permettent d'atteindre ce but.

L'objectif général de l'invention consiste à maintenir une distance minimale entre la face frontale de la remorque et la face adjacente du camion pendant toute la prise de virage jusqu'au virage maximum c'est-à-dire remorque perpendiculaire au camion dans le cas de remorques équilibrées et de semi-remorques.

Cette distance minimale est imposée selon l'invention par le contact d'articulation-butée sur les extrémités de deux bielles de liaison extensibles articulées d'une part sur le châssis du camion et d'autre part sur l'avant de la remorque, en un point commun ou distinctement de part et d'autre du timon.

Comme indiqué, l'attelage court selon l'invention présente une grande supériorité et de nombreux avantages par rapport aux attelages actuels :
- gain de place important aussi bien pour le chargement en vrac que pour la charge en palettes ;
- sécurité totale au roulage en ligne droite comme dans les courbes ;
- meilleure stabilité dans les courbes ;
- la prise d'attelage à l'arrière du camion reste celle de type universel permettant au camion de tracter n'importe quelle remorque ;
- les pièces d'articulation-butée assurent la garantie du maintien d'un espace minimal en ligne droite et de dégagement du coin selon la trajectoire la plus courte ;
- sécurité absolue car l'éventuelle défaillance du vérin réalisant la force de rappel se traduirait simplement par un allongement contrôlé du timon jusqu'à un appui mécanique.

L'invention sera bien comprise à la lecture de la description qui suit, effectuée à titre d'exemple non limitatif sur deux modes de réalisation en référence aux dessins accompagnants dans lesquels :

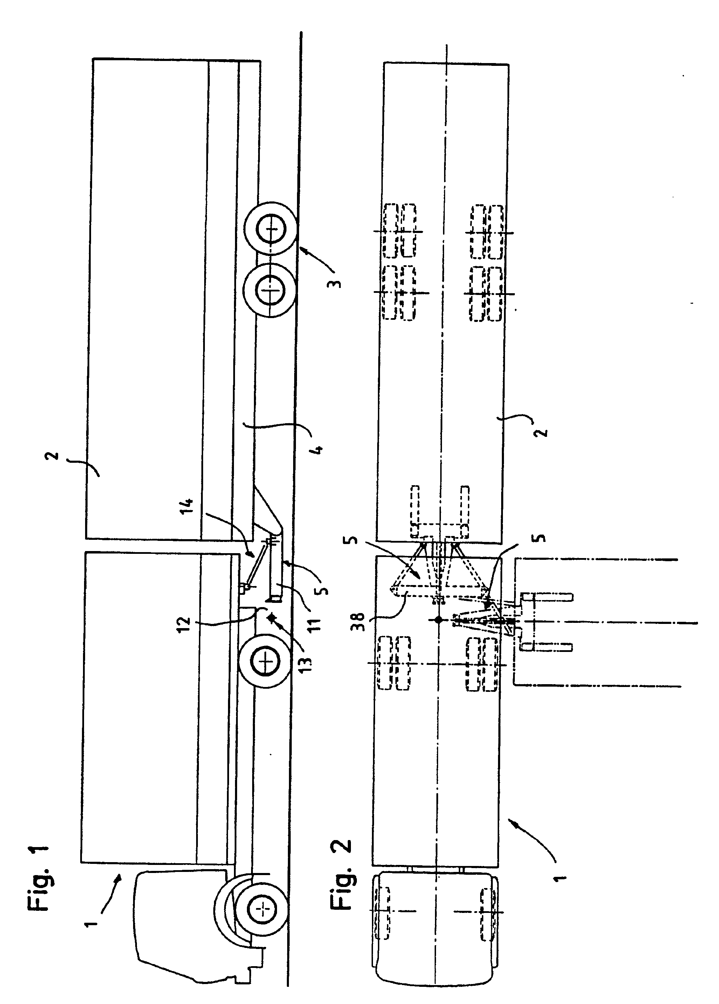

- les figures 1 et 2 sont des vues respectivement de profil et en plan d'un convoi du type camion et remorque dite équilibrée ou à essieux centraux, dont la liaison articulée est assurée par l'attelage selon l'invention formé d'un timon extensible et de deux bielles extensibles de articulation-butée ;
- les figures 3 et 4 sont des vues respectivement de profil et en plan d'un convoi du type semi-remorque dont la liaison articulée est assurée par l'attelage court selon l'invention ;
- la figure 5 est le schéma hydraulique du circuit de commande du vérin d'extension du timon avec représentation du détecteur de contact ;
- les figures 6, 7 et 8 sont des vues schématiques en plan dans les deux positions limites de ligne droite et perpendiculaire, et dans une position intermédiaire de virage dans le cas de deux bielles extensibles d'articulation-butée ;
- les figures 9 et 10 sont des vues respectivement de profil et en plan d'un exemple de réalisation d'un bras extensible de articulation-butée ;
- les figures 11, 12 et 13 sont des vues schématiques en plan illustrant un deuxième exemple d'utilisation selon trois configurations de position dans le cas d'une semi-remorque ;

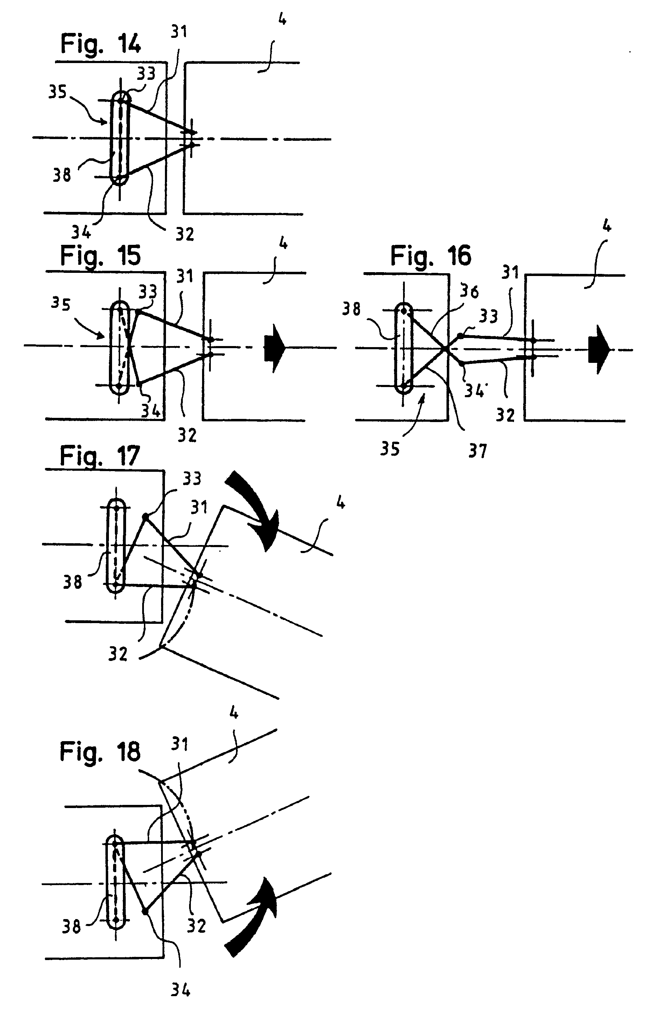

- les figures 14 à 18 sont des vues schématiques en plan d'une variante élaborée à deux bielles articulées supplémentaires :
  - en ligne droite rétracté
  - en ligne droite début d'extension
  - en ligne droite extension de déchargement
  - en virage à gauche
  - en virage à droite ;

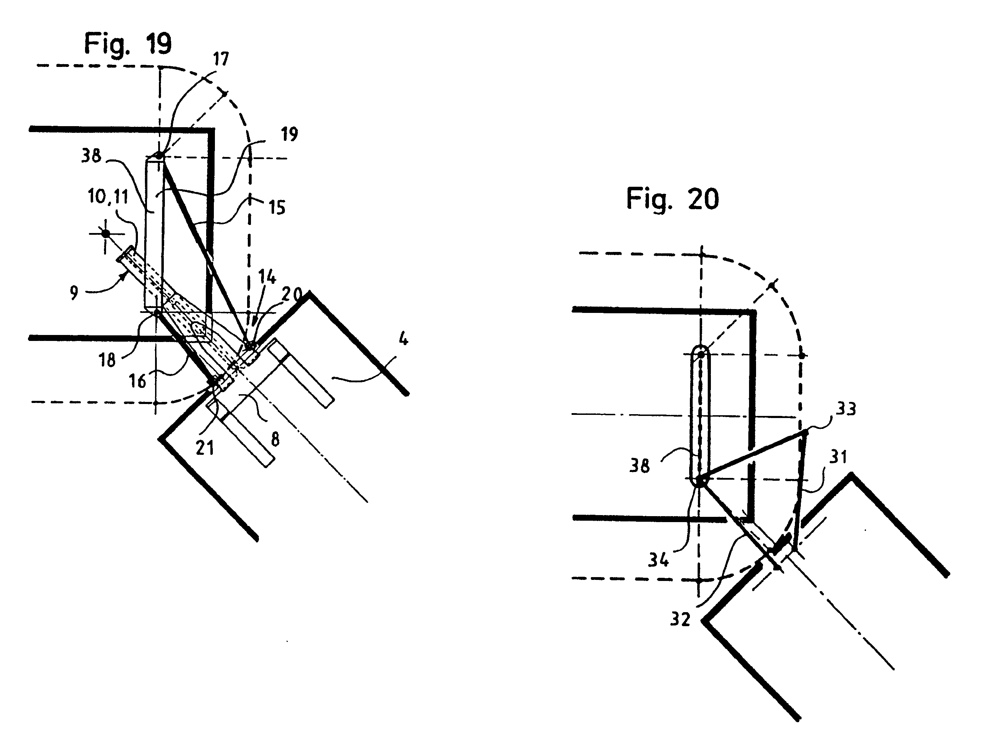

- la figure 19 est une vue schématique en plan illustrant la trajectoire enveloppée par la face avant de la remorque dans le cas d'un attelage simple conforme à l'invention ;
- la figure 20 est une vue schématique en plan illustrant la trajectoire enveloppée par la face avant de la remorque dans le cas d'un attelage à deux bielles articulées supplémentaires ;
- les figures 21 et 22 sont des vues de profil d'un convoi routier respectivement sur le plat et en creux d'une variante avec pièces supplémentaires d'articulation en partie haute par exemple à roulement.

On décrira l'invention à titre d'exemple ci-après par ses moyens généraux puis par ses moyens particuliers dans le cas de plusieurs variantes appliquées à une remorque dite équilibrée, par exemple à essieux centraux, puis à une remorque semi-portée.

L'idée générale inventive consiste à utiliser un timon extensible contraint en rappel élastique permanent de la remorque vers le camion en position d'écartement minimum à l'aide de deux bielles pivotantes extensibles symétriques par rapport à la ligne médiane du convoi, articulées d'une part sur le châssis du camion et d'autre part sur le front avant de la remorque en un point commun ou en deux points distincts de manière à imposer à l'appui de liaison de la remorque un trajet circulaire lors d'un virage. La bielle située côté virage encaisse la poussée de la force de rappel. Elle sert d'appui à la rotation qui s'effectue par son intermédiaire autour de son articulation de pivotement située sur le châssis du camion.

Cette rotation s'effectue avec maintien pendant tout le virage et jusqu'au virage maximum d'un écartement minimal entre la face avant de la remorque et la face arrière du camion, maintien apporté par la force élastique de rappel.

Le timon est de préférence mais non exclusivement réalisé extensible par le même moyen assurant la force de rappel élastique. Celle-ci peut provenir, par exemple, d'un ressort métallique ou d'un ou de plusieurs liens à effet de rappel.

Le rappel élastique assure le maintien constant d'un écartement minimum déterminé par la liaison mécanique d'attelage par bielles.

L'idée générale exposée ci-dessus est mise en oeuvre par les moyens généraux suivants, susceptibles de modifications évidentes ou mineures ou de substitutions par tous moyens équivalents, proches ou dérivés.

Un camion porteur remorqueur 1 tire une remorque équilibrée 2 à essieux centraux 3 comprenant un châssis 4 solidaire d'un timon extensible 5 susceptible de mouvements longitudinaux en rapprochement ou en éloignement de la face arrière du camion par rapport à la face frontale de la remorque.

Le timon 5 est de type classique porté par une traverse 8. Son élément central 9 est constitué ou prolongé par un ensemble télescopique 10 actionné par un dispositif coulissant par exemple un vérin de traction 11.

L'élément central 9 est terminé par une pièce en anneau 12 ou équivalent venant s'immobiliser sur un crochet d'attelage classique 13 ou équivalent.

Comme indiqué ci-dessus, le vérin 11 peut être dissocié de l'élément central 9 du timon et produire les mêmes effets aboutissant à l'extension ou à la rétraction du timon.

Selon une autre variante élaborée on peut prévoir deux moyens distincts fonctionnant en parallèle l'un pour l'extension ou la rétraction du vérin, l'autre pour le rappel élastique permanent en position d'écartement minimal.

Le ou les moyens d'extension et/ou de rappel élastique permanent en position d'écartement minimum ci-dessus est et/ou sont associés à un ensemble double 14 d'appuis symétriques d'articulation-butée mobiles par des pièces mécaniques de liaison reliant l'avant de la remorque à l'arrière du camion.

Il y a lieu de remarquer ici que le timon reste fixe par rapport à la remorque selon son axe longitudinal médian car solidarisé aux longerons de châssis.

Le mode de réalisation de base des fonctions d'articulation, de butée et de pièce de liaison pivotante selon cette invention sur remorques et semi-remorques est représenté sur les figures de 1 à 13. Une variante élaborée est illustrée par les schémas des figures de 14 à 17 montrant les principales configurations routières.

On réalise des appuis mobiles d'articulation-butée procurés par des pièces sous la forme de bielles extensibles 15 et 16 articulées d'une part à chaque extrémité 17 ou 18 d'une traverse 19 solidaire du châssis du camion et d'autre part à l'avant de la remorque en deux points 20 et 21 situés de chaque côté de l'axe horizontal de pivotement du timon 5.

Comme indiqué, les points 20 et 21 peuvent être confondus.

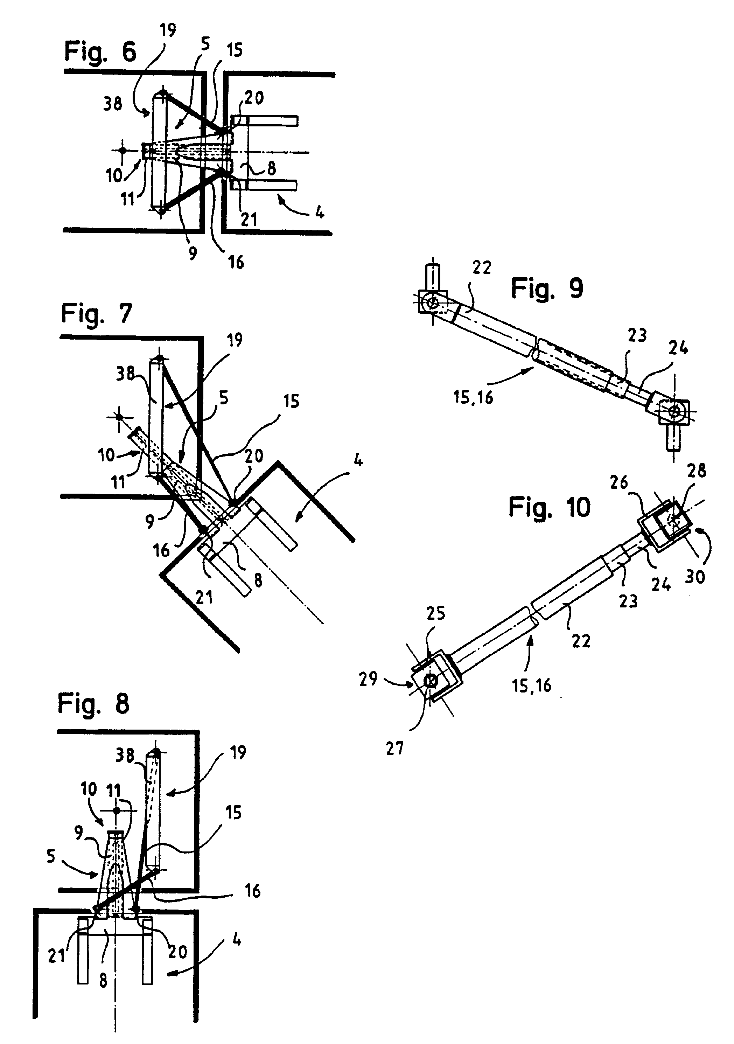

Les bielles extensibles 15 et 16 représentées en détail sur les figures 9 et 10 sont par exemple formées de trois tronçons télescopiques 22, 23 et 24 dont les tronçons d'extrémité sont terminés par des chapes 25 et 26 traversées par un axe d'articulation 27 et 28 porté par une pièce palière 29 et 30.

Selon une variante plus complexe, les bielles sont de longueur fixe 31 et 32 reliées par des articulations intermédiaires 33 et 34 à un dispositif extensible 35 constitué par exemple par deux bielles croisées 36 et 37 venant s'immobiliser en position transversale de repos contre une platine transversale de butée 38 par la force de rappel du vérin de traction.

La bielle croisée côté virage contrainte en position transversale de butée contre la platine transversale 38 ne joue aucun rôle actif pendant la prise de virage. Elle impose simplement une position fixe de travail à l'articulation intermédiaire 33 ou 34. Ainsi, l'extrémité de la bielle concernée 31 ou 32 décrit aussi une trajectoire de forme circulaire.

Chaque bielle opposée des bielles croisées 36 et 37 permet de procurer l'écartement variable nécessaire lors du virage entre la face arrière du camion et la demi-partie opposée de la face frontale de la remorque.

Cette variante élaborée constitue bien un parfait équivalent de l'attelage ci-dessus car chaque moyen rempli les mêmes fonctions que celles de la variante de base en vue d'obtenir les mêmes résultats.

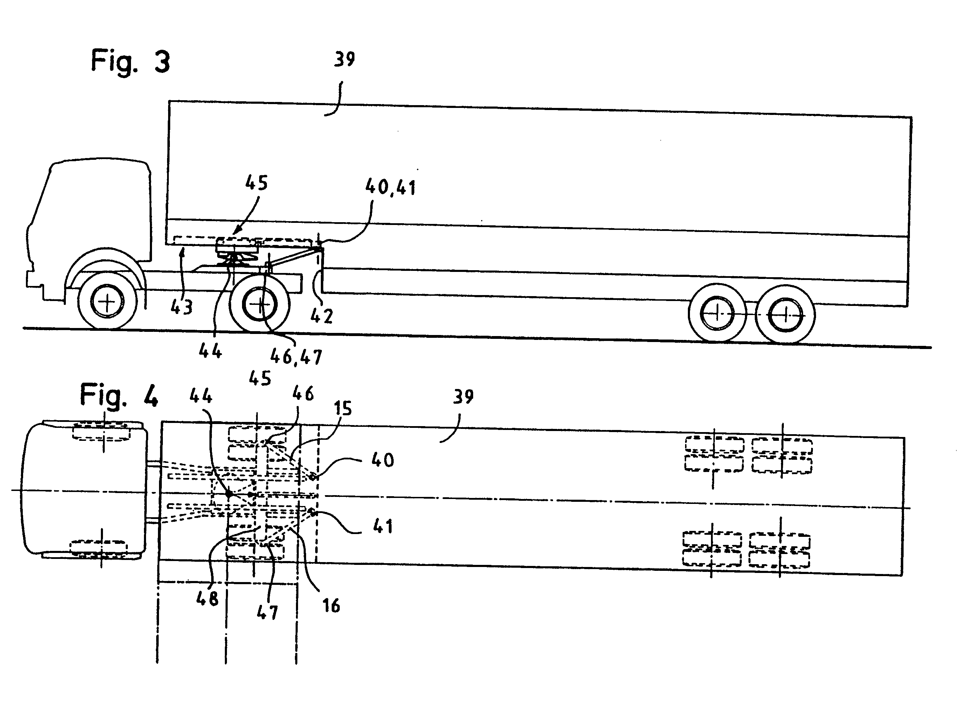

Il en est de même pour les bielles extensibles appliquées à une semi-remorque 39 (figures 3 et 4) sur laquelle les bras extensibles 15 et 16 sont articulés en deux points symétriques 40 et 41 sur la face transversale 42 en retrait du retour de sous-face 43 appelé classiquement col de cygne.

La tôle d'attelage et sa cheville ouvrière 44 composant la partie remorque de l'attelage sont montées sur un cadre coulissant 45 par le vérin 11 en rappel élastique permanent en sous-face de la partie avant de la semi-remorque, cet ensemble extensible étant équivalent au timon 5. Les bielles extensibles sont articulées en deux points 46 et 47 à chaque extrémité d'une traverse 48 montée sur le châssis au niveau ou à proximité de l'essieu arrière du tracteur.

Bien entendu, la variante élaborée s'applique pareillement à une semi-remorque (cas non représenté).

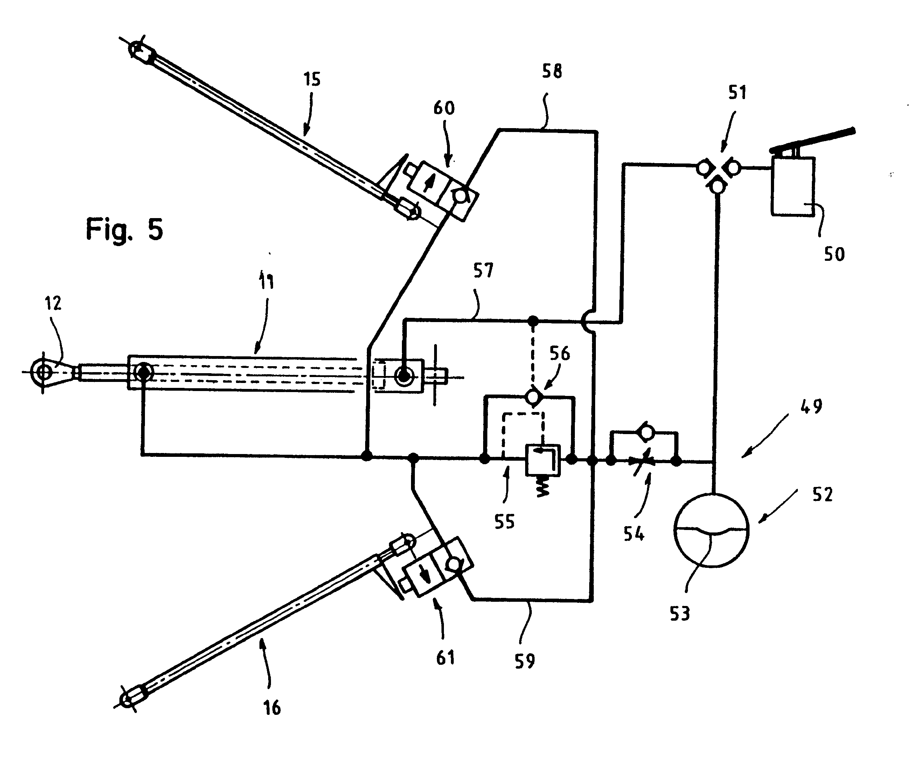

On examinera maintenant la commande hydraulique du vérin et les différentes sécurités prévues en cas de défaillance de celui-ci ou d'une configuration anormale entre le camion et la remorque en référence à figure 5.

Il s'agit d'un circuit hydraulique fermé 49 dans lequel est injecté le fluide hydraulique sous pression par une pompe à main 50 ou équivalent à travers un coupleur hydraulique 51 vers un accumulateur oléopneumatique 52 à membrane 53 ou à piston.

Le circuit principal comprend le vérin 11 par exemple à double effet, un étrangleur 54 destiné à freiner le retour du fluide vers la chambre, côté tige du vérin 11, l'étrangleur étant shunté par un clapet anti-retour, un obturateur hydraulique de pression 55 dont l'échappement est taré à un seuil de pression de sécurité, par exemple 250 bars. L'obturateur 55 est shunté par un clapet piloté 56 à partir de la conduite 57 alimentant la chambre du vérin côté extension du timon.

Deux circuits 58 et 59 comprenant des détecteurs de contact de butée 60 et 61 portés par chaque bielle extensible, sont montés en parallèle sur l'obturateur de pression 55. Il s'agit de fins de course hydraulique à tiroir ou analogue fermant le circuit au repos.

En fonctionnement permanent l'effort de rappel reste quasi constant en raison du tarage en pression de l'accumulateur 52. C'est le cas lorsque les deux détecteurs sont actionnés simultanément, régime normal de ligne droite, ou le cas de l'actionnement d'un seul détecteur, régime de virage.

Les détecteurs de contact de butés servent à déclencher une séquence de résistance à l'allongement du vérin.

Si aucun des détecteurs n'est sollicité c'est à-dire si tous les deux restent en l'aire simultanément, régime d'accélération, de pente montante, ou de freinage d'urgence, le contact avec la remorque n'est plus assuré simultanément sur les deux pièces d'articulation-butée comme représenté sur la figure 5. Dans ce cas, les deux détecteurs et leur circuit associé, permettent de forcer le passage du fluide à travers l'obturateur de pression 55 et, de ce fait, d'assurer par le vérin une résistance maximale à l'allongement jusqu'à la valeur de tarage maximum à partir de laquelle l'obturateur devient passant et constitue le retour direct à l'accumulateur.

On détermine ainsi une résistance maximale à l'allongement apportant une sécurité supplémentaire.

La pompe à main permet aussi la commande manuelle du vérin pour effectuer manuellement l'allongement de la liaison afin de procéder à l'ouverture des portes ou autre accès entre la remorque et le camion.

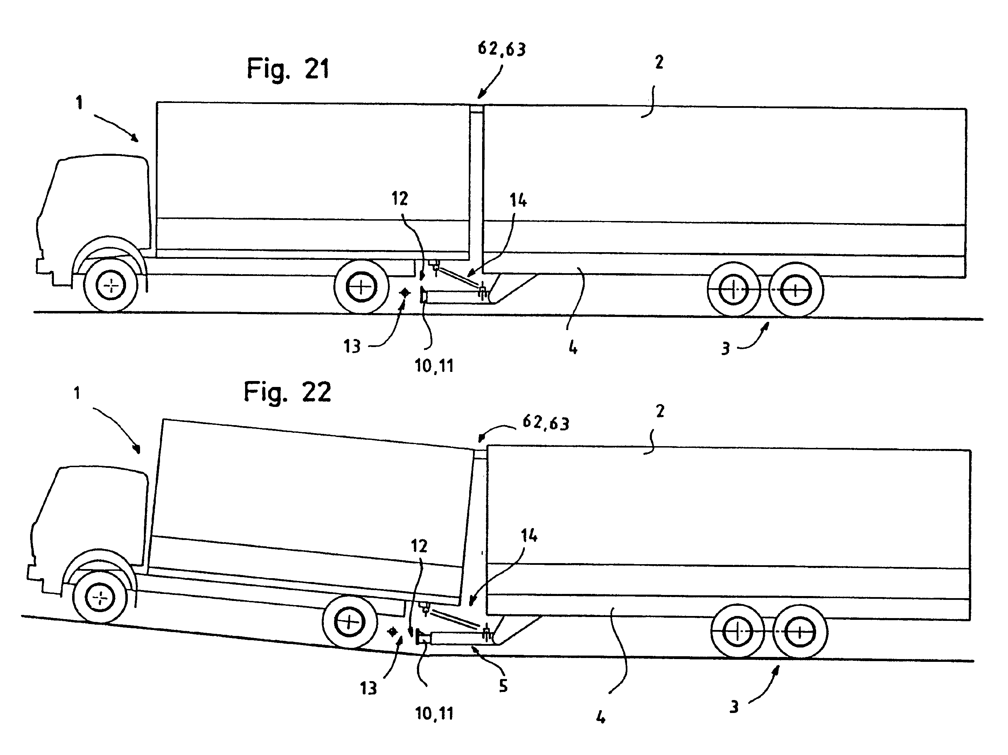

Pour des raisons de sécurité, on peut prévoir des bielles pivotantes complémentaires 62 et 63 en partie haute permettant d'éviter le choc des coins supérieurs du camion et de la remorque lors du passage dans des creux prononcés, comme représenté sur les figures 21 et 22 et, de ce fait, permettre encore une réduction supplémentaire de l'écartement minimal par dégagement par le bas ou par le haut dans les creux ou dans les bosses.

Le fonctionnement s'avère simple. En ligne droite, le vérin de traction 11 tient en appui, par la force de rappel qu'il développe, la remorque contre la face arrière du camion par l'intermédiaire des bielles articulées.

Lors de la prise de courbes, la force permanente de rappel contraint la remorque contre la bielle en service montée pivotante sur le camion.

A l'observation des figures de 6 à 13, on se rend compte du travail des deux bielles extensibles. Ce même travail est effectué, dans la variante élaborée, par les bielles croisées en série avec les bras de longueur fixe de la variante élaborée (figures de 14 à 18).

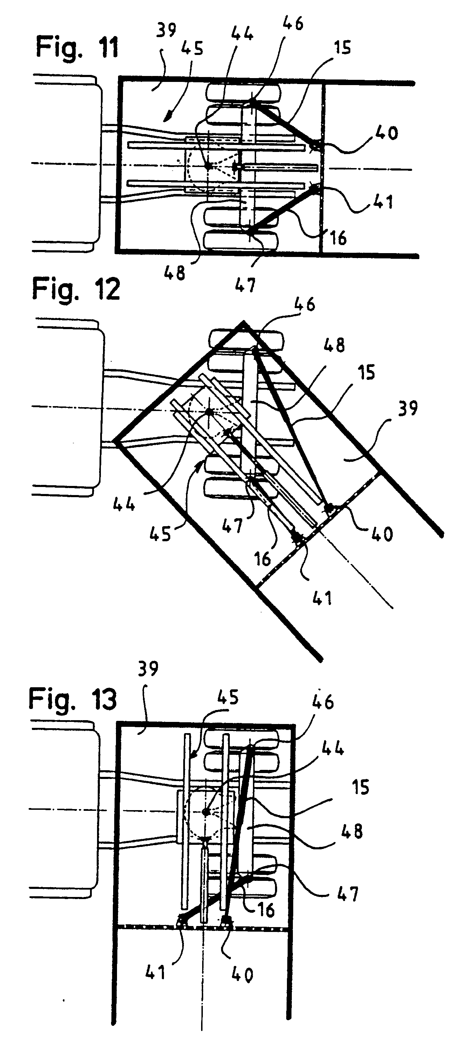

Lors d'un virage à gauche, c'est la bielle extensible de gauche (figures 7 et 12) qui joue le rôle d'appui. Elle reste rentrée à sa longueur minimale et reçoit en permanence la poussée de la force de rappel du vérin et de la composante axiale de la rotation.

La trajectoire du point d'articulation sur la remorque est un arc de cercle de centre de rotation confondu avec l'extrémité opposée de la bielle.

En virage maximal, remorque et camion perpendiculaires, les bras se croisent comme représenté sur les figures 8 et 13.

Dans le cas de la réalisation représentée sur les figures de 14 à 18, la butée d'une des bielles croisées 36 ou 37 contre une butée transversale intégrée à la traverse 38 immobilise l'articulation intermédiaire. L'ensemble se comporte donc dans les virages de façon indentique à la variante ci-dessus.

**Revendications**

1. Attelage court à géométrie variable reliant un véhicule tracteur à une remorque, notamment pour remorques (2) à essieux centraux (3) dites équilibrées et semi-remorques ou autres, ledit attelage comprenant un timon extensible (5) de longueur variable ainsi que deux ensembles de liaison disposés symétriquement par rapport à la ligne médiane de l'ensemble tracteur-remorque en déplacement en ligne droite, chaque ensemble de liaison étant articulé d'une part à l'avant de la remorque et d'autre part sur le châssis du véhicule tracteur en un point décalé latéralement par rapport à l'axe central longitudinal dudit véhicule tracteur, chaque ensemble de liaison pouvant être extensible de façon à ce qu'en virage, l'ensemble de liaison situé à l'extérieur du virage puisse s'allonger tandis que l'ensemble de liaison situé à l'intérieur du virage reste inextensible pour assurer un guidage de la remorque par rapport au véhicule tracteur, caractérisé en ce que :

• le timon extensible (5) est fixe transversalement par rapport à la remorque (2) ;

• au timon extensible (5) est associé un moyen de rappel élastique permanent sollicitant la remorque (2) vers sa position d'écartement minimum par rapport au véhicule tracteur ;

•chaque ensemble de liaison est librement extensible à partir d'une position de butée correspondant à un écartement minimal entre ses points d'articulations respectifs sur la remorque et sur le véhicule tracteur, ladite position de butée définissant l'écartement minimum entre la remorque (2) et le véhicule tracteur en ligne droite ainsi qu'un appui pivotant latéral de pivotement de la remorque par rapport au véhicule tracteur en virage.

2. Attelage selon la revendication 1, caractérisé en ce que les ensembles de liaison sont des bielles extensibles (15) et (16) symétriques dont les extrémités (46, 47) et (40, 41) sont montées pivotantes d'une part sur le châssis du camion et d'autre part sur la remorque, bielles (15, 16) dont les extrémités (40, 41) montées sur la remorque constituent les appuis symétriques mobiles d'articulation-butée.

3. Attelage selon la revendication 1, caractérisé en ce que les ensembles de liaison sont formés de deux bielles symétriques de longueur fixe (31) et (32) articulées d'une part à la remorque et d'autre part à un dispositif extensible (35) par deux articulations intermédiaires (33) et (34).

4. Attelage selon la revendication 3, caractérisé en ce que le dispositif extensible (35) est un dispositif articulé formé par deux bielles croisées (36, 37) rabattables contre une traverse portée par le châssis du camion.

5. Attelage selon la revendication 1, caractérisé en ce que la force de rappel est fournie par un vérin (11).

6. Attelage selon les revendications 4 et 5, caractérisé en ce que la force de rappel est quasi constante par l'alimentation du vérin à un accumulateur (52), circuit d'alimentation comprenant un obturateur hydraulique (55) commandé par des détecteurs de butée entre le camion et la remorque afin de réaliser une résistance à l'allongement du vérin.

**Patentansprüche**

1. Kurzkupplungsvorrichtung mit verstellbarer Geometrie, die ein Zugfahrzeug mit einem Anhänger verbindet, insbesondere für Anhänger (2) mit Zentralachsen (3), sogenannte ausgewogene Anhänger und Auflieger oder andere, wobei die Kupplung eine ausziehbare Zugdeichsel (5) mit verstellbarer Länge sowie zwei Verbindungseinheiten umfaßt, die symmetrisch bezüglich einer Medianlinie der Einheit Anhänger-Zugfahrzeug bei Bewegung in gerader Linie angeordnet ist, wobei jede Verbindungseinheit einerseits an der Vorderseite des Anhängers und andererseits an dem Chassis des Zugfahrzeugs in einem seitlich verschobenen Punkt bezüglich der Längszentralachse des besagten Zugfahrzeugs gelenkig montiert ist, wobei jede Verbindungseinheit derart ausziehbar ist, daß in einer Kurve die Verbindungseinheit an der Kurvenaußenseite sich verlängern kann, wohingegen die Verbindungseinheit im Kurveninnern nicht-ausgezogen verbleibt, um eine Führung des Anhängers bezüglich des Zugfahrzeugs zu gewährleisten, dadurch gekennzeichnet daß

•die ausziehbare Zugdeichsel (5) in Bezug auf den Anhänger (2) transversal unbeweglich angebracht ist ;

•der ausziehbaren Zugdeichsel (5) ein ständiges elastisches Rückholmittel zugeordnet ist, welches den Anhänger (2) im Minimalabstand bezüglich dem Zugfahrzeug bewegt ;

•jede Verbindungseinheit frei von einer Anschlags-position aus ausziehbar ist, die einem Minimalabstand zwischen den jeweiligen Gelenkverbindungspunkten am Anhänger und am Zugfahrzeug entspricht, wobei die Anschlagsposition den Minimalabstand zwischen dem Anhänger (2) und dem Zugfahrzeug in gerader Linie definiert sowie einen seitlichen Abstützpunkt zum Verschwenken des Anhängers bezüglich dem Zugfahrzeug in der Kurve.

2. Kupplung nach Anspruch 1, dadurch gekennzeichnet, daß die Verbindungseinheiten ausziehbare symmetrisch angeordnete Stangen (15 und 16) sind, deren Enden (46, 47) und (40, 41) einerseits auf dem Chassis des Lastwagens und andererseits auf dem Anhänger verschwenkbar angeordnet sind, wobei die Enden (40, 41) der Stangen (15, 16), die auf dem Anhänger angeordnet sind, symmetrisch angeordnete bewegliche Ansschlaggelenkstützen bilden.

3. Kupplung nach Anspruch 1, dadurch gekennzeichnet, daß die Verbindungseinheiten aus jeweils zwei symmetrischen Stangen mit fester Länge (31 und 32) bestehen, die einerseits auf dem Anhänger und andererseits an einer ausziehbaren Einrichtung (35) durch zwei Zwischengelenkverbindungen (33 und 34) gelenkig verbunden sind.

4. Kupplung nach Anspruch 3, dadurch gekennzeichnet, daß die ausziehbare Einrichtung (35) eine gelenkige Einrichtung ist, die aus zwei gekreuzten Stangen (36 und 37) besteht, wovon jede gegen eine auf dem Chassis angebrachte Querstange geklappt werden kann.

5. Kupplung nach Anspruch 1, dadurch gekennzeichnet, daß die Rückholkraft durch einen Hydraulikzylinder (11) geliefert wird.

6. Kupplung nach den Ansprüchen 4 und 5, dadurch gekennzeichnet, daß die Rückholkraft durch die Versorgung des Hydraulikzylinders mit Hilfe eines Speichers (52) im wesentlichen konstant ist, wobei der Lieferkreis einen hydraulischen Verschluß (55) umfaßt, der von Anschlagdetektoren zwischen dem Lastkraftwagen und dem Anhänger betätigt wird, um einen Widerstand bei der Verlängerung des Hydraulikzylinders herzustellen.

## Claims

1. Short coupling device with variable geometry connecting a towing vehicle to a trailer, in particular for trailers (2) having central axles (3) and known as balanced trailers and semi-trailers or others, the said coupling device comprising an extendable drawbar (5) of variable length and two connection assemblies arranged symmetrically with respect to the median line of the towing vehicle-trailer assembly with displacement in a straight line, each connection assembly being articulated, on the one hand, to the front of the trailer and, on the other hand, to the chassis of the towing vehicle at a point laterally offset with respect to the central longitudinal axis of the said towing vehicle, each connection assembly being capable of extension so that, during cornering, the connection assembly located on the outside of the bend can extend while the connection assembly located on the inside of the bend remains incapable of extension in order to ensure that the trailer is guided in relation to the towing vehicle, **characterised in that** :

— the extendable drawbar (5) is fixed transversely in relation to the trailer (2) ;

— associated with the extendable drawbar (5) there is a continuous elastic pull-back means pulling the trailer (2) towards its position of minimum clearance with regard to the towing vehicle ;

— each connection assembly is freely extendable from an abutment position corresponding to a minimum clearance between its respective hinge points on the trailer and on the towing vehicle, the said abutment position defining the minimum clearance between the trailer (2) and the towing vehicle in a straight line, and a lateral pivoting support for the pivoting of the trailer in relation to the towing vehicle during cornering.

2. Coupling device according to claim 1, **characterised in that** the connection assemblies are symmetrical extendable connecting rods (15) and (16), the ends (46, 47) and (40, 41) are pivotably mounted, on the one hand, on the chassis of the lorry and, on the other hand, on the trailer, with the connecting rods (15, 16), the ends (40, 41) of which are mounted on the trailer, forming the movable symmetrical jointed abutment supports.

3. Coupling device according to claim 1, **characterised in that** the connection assemblies are formed by two symmetrical connecting rods of fixed length (31) and (32) articulated, on the one hand, to the trailer and, on the other hand, to an extendable device (35) by means of two intermediate joints (33) and (34).

4. Coupling device according to claim 3, **characterised in that** the extendable device (35) is a jointed device formed by two crossed connecting rods (36, 37) which can be folded against a cross-piece carried on the chassis of the lorry.

5. Coupling device according to claim 1, **charac-** terised in that the pull-back force is supplied by a jack (11).

6. Coupling device according to claims 4 and 5, **characterised in that** the pull-back force is virtually constant due to the supply from the jack to an accumulator (52), the supply circuit having a hydraulic obturator (55) controlled by abutment detectors between the lorry and the trailer, in order to produce resistance to the extension of the jack.

Fig. 1

Fig. 2

Fig. 3

Fig. 4

Fig. 5

Fig. 6

Fig. 7

Fig. 8

Fig. 9

Fig. 10

**Fig. 11**

**Fig. 12**

**Fig. 13**

Fig. 14

Fig. 15

Fig. 16

Fig. 17

Fig. 18

Fig. 20

Fig. 19

**Fig. 21**

**Fig. 22**